# EUROPEAN PATENT SPECIFICATION

(11) **EP 2 361 007 B1**
(45) Date of publication and mention of the grant of the patent: **06.11.2013**
(21) Application number: 09835344.4
(22) Date of filing: 11.12.2009
(51) Int. Cl.: A01B 73/06, A01B 63/24, A01C 7/08, A01B 71/02

(54) **AGRICULTURAL MACHINE FOR SOIL TILLAGE**
LANDWIRTSCHAFTLICHE MASCHINE ZUR BODENBESTELLUNG
MACHINE AGRICOLE UTILISÉE POUR LE TRAVAIL DES SOLS

(30) Priority: 22.12.2008 SE 0850181
(43) Date of publication of application: 31.08.2011
(73) Proprietor: Väderstad-Verken AB, 590 21 Väderstad (SE)
(72) Inventor: GILSTRING, Gert, 592 92 Vadstena (SE)
(74) Representative: Lettström, Richard Wilhelm
(86) International application number: PCT/SE2009/051403
(87) International publication number: WO 2010/074633

(56) References cited:
- WO-A1-2007/043965
- DE-A1- 1 947 036
- US-A- 63 018

## Description

### Technical area

The present invention relates to an agricultural machine for soil cultivation according to the pre-characterising portion of Claim 1.

### Background of the invention

A similar agricultural machine is known through SE-A-529190.

Row-sown crops such as vegetables, beet, maize, sunflower, cotton etc. must be sown with relatively large row spacing and with an even distance between the seeds. For a long time professionals have been constructing machines for this purpose, which are known in English, or rather American, as planters. These machines have become increasingly better in pace with the general developments in agriculture. A particular problem is that different crops are sown with different row spacings. Maize, peas and other crops are sown with different predetermined row spacings, which can normally vary between 50 and 80 cm, with for example maize often being sown at a row spacing of approx. 76 cm. This problem has been resolved in various ways, for example through the farmer owning two machines where the planter aggregates are mounted at different distances or through the aggregates being re-mounted between sowing of different crops. Another solution that is used is to fold up alternate aggregates so that the row spacing is doubled. An additional problem is that the planter must be able to be transported on public roads between different fields. For this purpose the machines have been equipped with different folding-up systems. An additional solution to the problems described is an agricultural machine, as mentioned above, such as is shown and described in SE-A-529190. On this planter the planter aggregates are pivotably journalled in bearings at the frame beam parts each around its vertical axis and are connected to each other by a parallel insert. The transport and support wheels of the frame beam parts are also at their wheel arms pivotably journalled in bearings at the frame beam parts each around its vertical axis. The frame beam parts comprise two main sections, which are angled backwards viewed in the driving direction to decrease the row spacing and in the transport conversion. A problem is how to fold up such a planter sufficiently to achieve an acceptable transport width. A planter has almost always an even number of planter aggregates and it is the two planter aggregates in the middle of the machine which end up side by side during folding up that are the limitation on how much the frame beam parts can be angled backwards. An extra joint at each frame beam part can admittedly decrease the transport dimensions and this joint is necessary on large working widths. Such a joint on the other hand is complicated in its construction and in addition is expensive on small and medium working widths.

### Aim of the invention

The aim of the present invention is to achieve an agricultural machine of the initially described type that solves the above-mentioned problems.

This aim has been achieved with an agricultural machine that has been given the characterising features of Claim 1.

Preferred embodiments of the invention have been given the characteristics presented in the sub-claims.

### Summary of the invention

An agricultural machine in the form of a planter is constructed from coupled frame beam parts of an appropriate material that are rotatable in the horizontal plane. For example each frame beam part can consist of a square beam, so that the frame beam parts are both rigid and inflexible. These frame beam parts are provided with at least one joint so as by means of a hydraulic cylinder to angle the frame beam parts from a straight transverse position where the frame beam parts extend crosswise with regard to the driving direction of the agricultural machine to an angled position. This function can give a machine desirable advantages. If in addition one of the frame beam parts, which comprises one wing of the agricultural machine, is extended in the longitudinal direction of the beam so that the frame beam part of the other wing is jointed at a point at a predetermined distance from the end of said one frame beam part, the planter aggregates that are placed in the middle of a even number of tools, so-called planter aggregates, can both be mounted on the one frame beam part that is elongated. Through this the one aggregate is jointed fast at the end of the extended frame beam part and the other is jointed fast at a point that is disposed mainly at the same distance from the joint point between the frame beam parts but at the opposite side thereof. The aggregate mounted on the extension will then be displaced forwards when the frame beams or wings are angled backwards and the two aggregates in the middle are then displaced in the longitudinal direction in relation to each other and can in this way lie closer to each other in the transverse direction so that the frame beam parts with aggregates jointedly mounted thereto can be folded up to an entity with even smaller transport width than is known to date. An even number of aggregates gives a predetermined width of the agricultural machine, which corresponds to the width of most combine harvesters.

In an alternative embodiment of the agricultural machine according to the invention the frame beam parts are jointed at their fore ends and one of the two centrally positioned planter aggregates is jointedly mounted at the joint point between the frame beam parts. In this case the drawbar is jointed and angled in such a way that the main resultant power of the machine in passage straight ahead from the fore end of the drawbar, which coincides with the draught point of the draught vehicle, which is generally a tractor, is disposed between the two centrally positioned aggregates. This means that said resultant power is disposed in a longitudinal vertical plane, which extends mainly through the coupling point of the drawbar. The aggregate that is jointed at said joint point between the frame beam parts then comes to be furthest forward alone relative to other aggregates when the frame beam parts are angled backwards.

The planter aggregates that are jointedly mounted on the frame beam parts alter their relative spacing accordingly as the angle between the frame beam parts increases or decreases. In the working position this allows different row spacings to be set. The aggregates are also provided with a parallel insert, which is adapted to control the aggregates so that in the different working positions they come to be parallel to the driving direction. If the frame is angled sufficiently a wide machine can be folded up so that it becomes transportable on public roads.

The parallel insert consists of at least one parallel guide rod along every frame beam part, wherein aggregates that are rotatably connected to the frame beam parts are also rotatably connected to the associated parallel guide rod. In the case of a guide rod along every frame beam part one parallel guide bar carries a number of aggregates on the one frame beam part, which number is normally two less than the number of aggregates on the parallel guide rod along the other frame beam part. It should be pointed out that the number of tools that are rotatably connected to the one frame beam part is at least more than the number of tools that are rotatably connected to the other frame beam part.

With very wide machines the frame can be provided with an additional joint to allow the frame beam parts to be folded up to a transport position. The outer frame beam parts on each side thereby become mainly parallel to each other and acquire an elongation in the direction of travel. During unfolding of the frame beam parts the two frame beam parts on each side of the machine become parallel to each other, which is controlled by the hydraulic cylinder mounted on the drawbar.

The machine suitably has wheels that keep the frame beam parts at the desired height above the ground in both the working position and the transport position. These wheels must run parallel to the direction of travel. At least one wheel on each side is mounted at the frame beam parts by means of a linkage system in such a way that the wheels always roll parallel to the aggregates, regardless of the angle setting that the frame beam parts have.

The joint between the frame beam parts can be laterally displaced in relation to the vertical plane through the machine.

The drawbar can herein be jointed at the same point or can be jointed at the one frame beam part in the vertical plane through the coupling point of the drawbar on the draught vehicle or at another point. If the drawbar is jointed in the vertical plane its angle is not altered in the horizontal plane. If the drawbar is jointed at the side of the vertical plane the linkage arrangement should be designed so that the angle between every frame beam part and the vertical plane is always mainly equal.

### Drawing summary

The invention is described in more detail in the following with reference to the attached drawings, which show preferred embodiments.
Fig. 1 shows a perspective view of a first embodiment of an agricultural machine according to the invention where the machine is disposed in a working position with a predetermined distance between the planter aggregates in the transverse direction.
Fig. 2 shows a side view of the first embodiment of the agricultural machine according to the invention where the machine is disposed in a working position with greatest distance between the aggregates in the transverse direction.
Fig. 3 shows a side view of the first embodiment of the agricultural machine according to the invention where the machine is disposed in a working position with a predetermined distance between the aggregates in the transverse direction corresponding approximately to the working position shown in Fig. 1.
Fig. 4 shows a side view of the first embodiment of the agricultural machine according to the invention where the machine is disposed in a transport position.
Fig. 5 shows a planar view of the first embodiment of the agricultural machine corresponding to the working position shown in Fig. 2.
Fig. 6 shows a planar view of the first embodiment of the agricultural machine corresponding to the working positions shown in Figs. 1 and 3.
Fig. 7 shows a planar view of the first embodiment of the agricultural machine corresponding to the transport position shown in Fig. 4.
Fig. 8 shows a planar view of the first embodiment of the Agricultural machine in a special working position where several details have been removed for the sake of clarity.
Fig. 9 shows a planar view similar to that in Fig. 8 of a second embodiment of the agricultural machine where several details have been removed for the sake of clarity.
Fig. 10a shows a planar view similar to that in Fig. 8 of a third embodiment of the agricultural machine where several details have been removed for the sake of clarity.
Fig. 10b shows a planar view similar to that in Fig. 10 of the third embodiment with the difference that the drawbar is straight and lacks an angled part at its machine end.
Fig. 11 shows a planar view similar to that in Fig. 8 of a fourth embodiment of the agricultural machine where several details have been removed for the sake of clarity.
Fig. 12 shows a planar view similar to that in Fig. 8 of a fifth embodiment of the agricultural machine where several details have been removed for the sake of clarity.
Fig. 13 shows a planar view similar to that in Fig. 8 of a sixth embodiment of the agricultural machine where several details have been removed for the sake of clarity.

### Detailed description of preferred embodiments

Similar parts/details of the embodiments described and illustrated in the drawings have been given the same reference number.

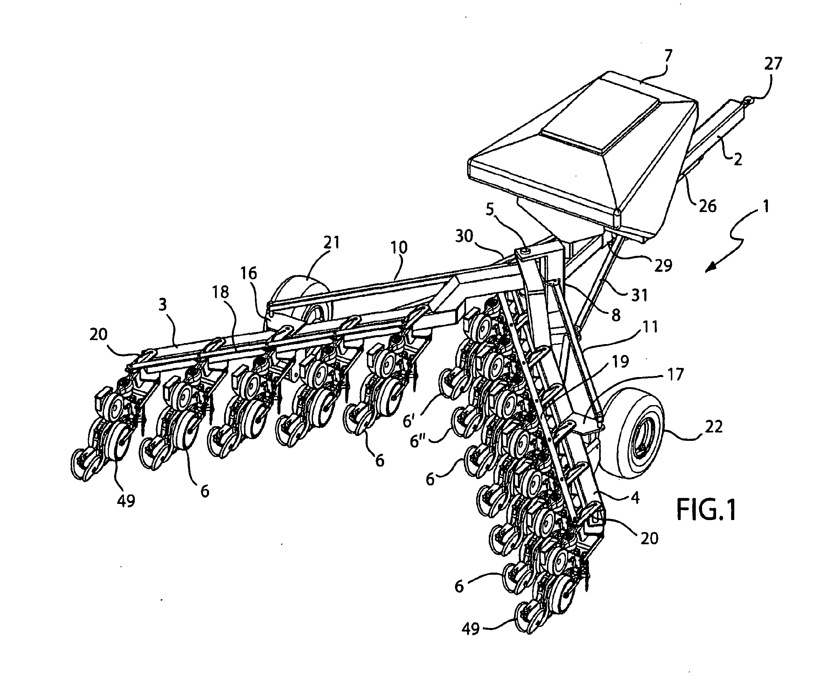

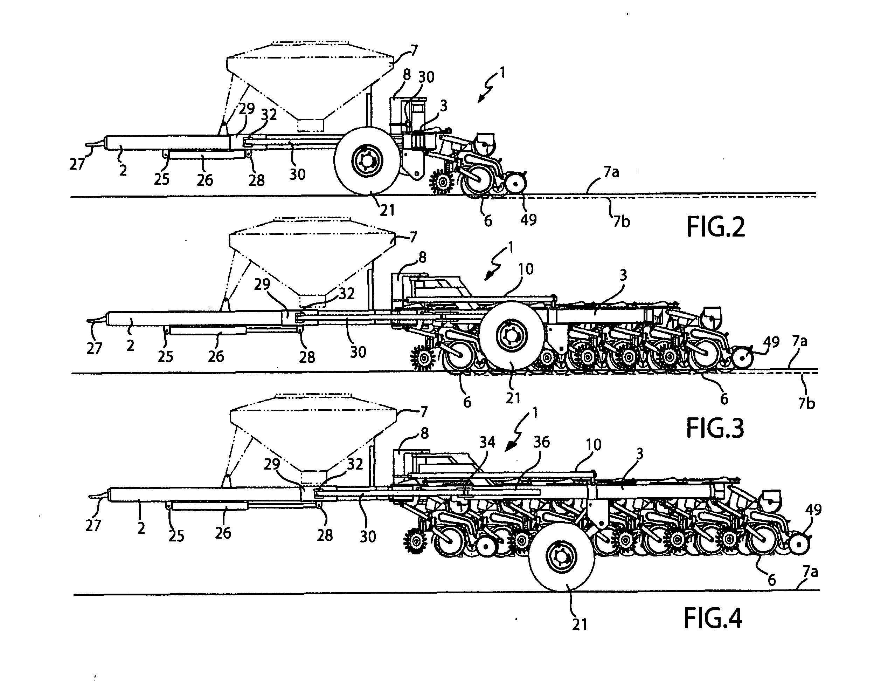

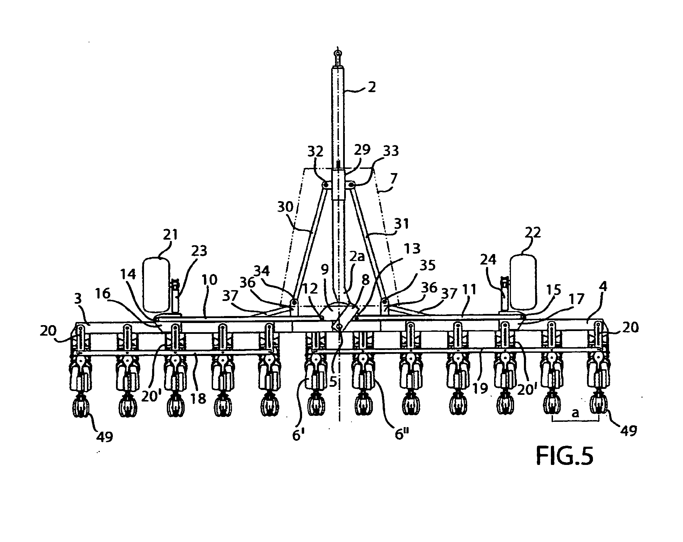

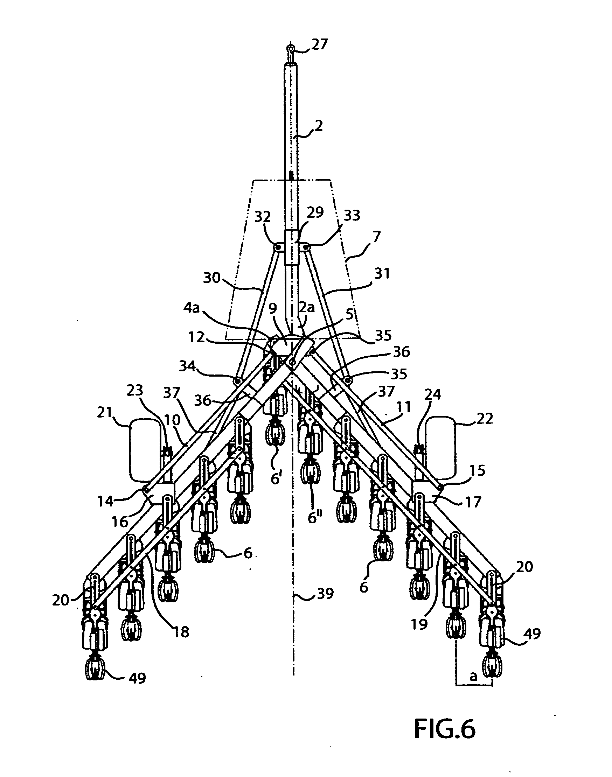

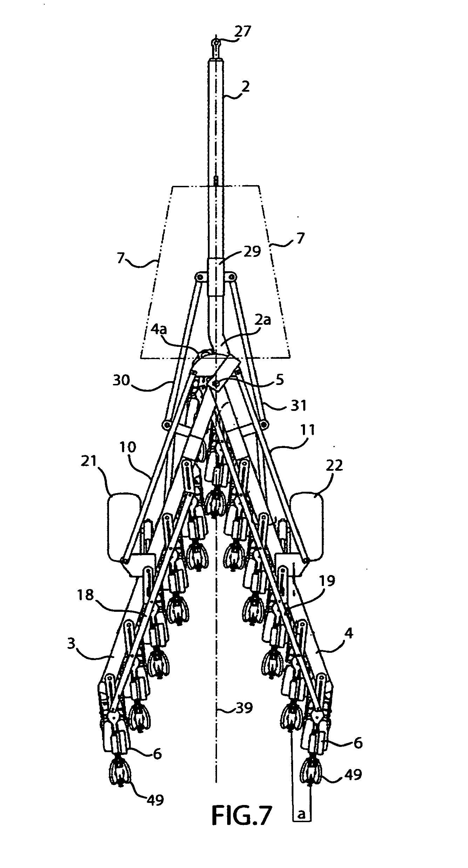

Fig. 1-8 illustrate a first embodiment of an agricultural machine 1 according to the invention for soil cultivation. The machine 1 has a drawbar 2, which is connected to two frame beam parts 3 and 4, which in their turn are rotatably connected to each other at a mainly vertical joint 5. The machine 1 is shown here in different positions from maximum row spacing between soil cultivating tools 6, so-called planter aggregates (Figs. 2, 5), mounted at equal distance from each other and rotatable on the frame beam parts 3, 4 in the horizontal plane, and thereby the greatest working width, to a working position with smaller distance between the planter aggregates 6 (Figs. 1, 3, 6 and 8) and a transport position with least distance between the planter aggregates 6 (Figs. 4 and 7).

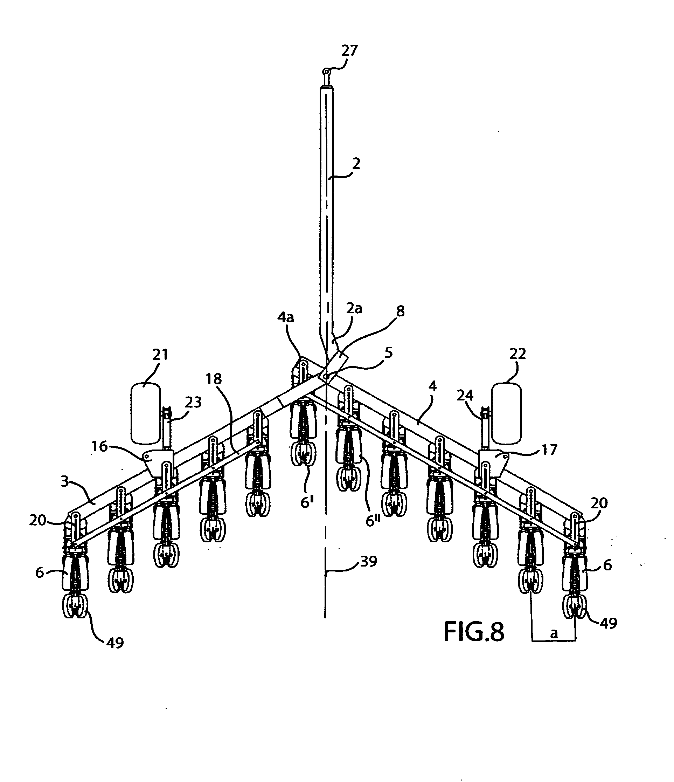

A vertical plane 39 extends through the linkage point 27 of the drawbar 2 at a draught vehicle and runs parallel to the driving direction and mainly between the two planter aggregates 6' and 6" mounted foremost on the right frame beam part 4. The machine is suitably drawn by a draught vehicle, such as a not shown tractor or similar. On the drawbar 2 is mounted a container 7, which can be used for seed and/or fertiliser. The agricultural machine 1 can therefore be provided with a not shown spreader device or similar. The container 7 can also be used for transport of other goods. Devices that meter seed or fertiliser directly to the opener of each planter aggregate 6 can be arranged. For the sake of clarity the container 7 has only been indicated by dashed lines in Figs. 2-7 and it has been completely omitted from Figs. 8-12. Not shown containers can alternatively or additionally be mounted on the frame beam parts, suitably one on each frame beam part 3 and 4. Each planter aggregate 6 can furthermore be provided with a container 7 for seed, which is preferably metered via openers down into the soil at a pre-set sowing depth adjusted by means of support wheels, which is illustrated by a dashed line 7a under the soil line 7b in Figs. 2 and 3, along which dashed line the seed is intended to be placed in the soil. A pair of wheels 49 on each aggregate close up the seed furrow and reconsolidate the soil after sowing.

At the rear end viewed in the driving direction of the drawbar 2, the frame beam parts 3, 4 are accordingly rotatably mounted. As is shown in the planar views of the different embodiments these are divided into the left part 3 and the right part 4 viewed in the driving direction. The parts 3, 4 are rotatably mounted at a coupling portion 8, which is rigidly fastened at the drawbar 2 and has a mainly U shape, where the vertical joint 5 is journalled in bearings in the legs of the U and the body of the U is fastened at the drawbar 2. A linkage mechanism for controlling the angle of each planter aggregate 6 relative to the frame beam parts 3, 4 comprises a linkage plate 9, which is fixed at the coupling portion 8 and at the side flanges of which inner ends of linkage arms 10 and 11 are rotatably jointed at 12 and 13 respectively. The outer ends of the linkage arms 10 and 11 are rotatably journalled in bearings at 14, 15 on brackets 16 and 17 respectively, which are rotatably journalled in bearings at the frame beam parts 3 and 4 at a predetermined distance from the outer ends of the latter and which are connected to parallel guide rods 18 and 19, which in their turn are rotatably arranged on the planter aggregates 6, so that these remain mainly parallel to the driving direction. The parallel guide rods 18 and 19 are rotatably connected to the frame beam parts 3 and 4 respectively via intermediate rotatably journalled in bearings links 20, wherein a selected link 20' on each side of the elongated central axis of the agricultural machine is normally rigidly fixed at its own bracket 16 and 17 respectively. In order to be able to displace the frame beam parts somewhat further during transition to the transport position, the brackets 16 and 17 can be rotated an intended angle from a not shown stop against the force of a not shown, relatively rigid spring, which is suspended to the stop.

Support and transport wheels 21 and 22 are freely rotatably journalled in bearings on wheel arms 23 and 24 respectively, which are connected to the frame beam parts 3 and 4 respectively via brackets 16 and 17 respectively. On rotation of the frame beam parts 3, 4 through the connection of the linkage arms 10, 11 with the linkage plate 9 the brackets are rotated relative to the frame beam parts 3, 4 so that the wheel arms 23, 24, which like the links 20' are rigidly fixed on the brackets 16 and 17, follow the rotation of the planter aggregates 6 in relation to the frame beam parts 3, 4. Instead of rotatably fixing the wheel arms 23, 24 around a horizontal axis at their respective brackets 16, 17 they can be directly fixed at a predetermined planter aggregate 6 each. Since the wheels 21, 22 are coupled to the movement of the aggregates 6 in this way, they are adapted to be controlled so that they always roll parallel to the driving direction of the machine 1.

By means of these support wheels 21, 22 the height of the machine 1 over the ground 7a is also controlled, which can be achieved by having on each support wheel 21, 22 a not shown hydraulic cylinder, which can have pre-adjustable piston length limiters. When the portion of the machine 1 at the support wheels 21, 22 is lifted by means of the hydraulic cylinders, the planter aggregates 6 are lifted up out of the soil to a not shown stop so that the machine 1 can be turned on headlands in order to get into position for the next pass without the aggregates 6 disrupting turning and/or without damage or wear to the aggregates during the turning movement.

The one end of a hydraulic cylinder 26 is connected to the drawbar 2 at a predetermined distance from the fore coupling point 27 of the drawbar 2 and its other end 28 is connected to a slider link 29 that is moveable along the drawbar 2. The linkage arms 30 and 31 are rotatably connected at their fore ends on each side of the slider link at 32 and 33 respectively. The rear ends of the linkage arms 30 and 31 are at 34 and 25 respectively rotatably connected to each other by holder arms 36 and 37 respectively fastened with a reciprocal angle at the frame beam parts 3 and 4 respectively. On activation of the hydraulic cylinder 26 the frame beam parts 3, 4 are accordingly brought, through the action of the glider link 29 on the linkage arms 30, 31, to be set in different intended reciprocal angle positions, which is illustrated through the different positions in Figs. 1 - 8, where the mainly equal distances a between neighbouring planter aggregates 6 have been altered.

The rotation of the brackets 16 and 17 relative to the frame beam parts 3, 4 when these are rotated to a new row spacing position is such that the wheel arms 23, 24 and the planter aggregates 6 are arranged parallel to the longitudinal direction of the machine 1. The parallel orientation of the planter aggregates 6 is achieved through the parallel guide rods 18, 19, through the rotation of the brackets 16, 17, being displaced relative to the frame beam parts 3, 4 so that all aggregates 6 maintain a position mainly parallel to the longitudinal direction of the machine 1. This is apparent in a comparison between Figs. 5, 6, 7 and 8. As shown in Figs. 5 - 8 five planter aggregates 6 are rotatably connected to the left guide rod 18, while seven planter aggregates 6 are connected to the right guide rod 19. This construction measure according to the invention together with the special design of the drawbar 2, lead to the agricultural machine being able to be given a very narrow transport width and also retaining the advantages of other earlier known machines of this type. In Fig. 8 several parts, including the linkage arms 10 and 11, have been removed in order to better reveal the interaction of the guide rods 18, 19 with the frame beam parts 3, 4 and the planter aggregates 6 at the links 20, 20'.

The total number of planter aggregates 6 along the frame beam parts 3, 4 is even, although the number on the left frame beam part is two less than on the right. As best shown in Figs, 6, 7 and 8 the right frame beam part 4 is somewhat longer than the left frame beam part 3. A planter aggregate is rotatably mounted at the fore end 4a of the right frame beam 4 and both frame beam parts are rotatably connected to each other at a joint 5, which is disposed a predetermined distance from the fore end 4a of the right frame beam part 4. The drawbar 2 has an angled rear end part 2a that is fastened at the coupling portion 8, so that a vertical plane 39 through the linkage point 27 of the drawbar 2 runs parallel to the driving direction between the two planter aggregates 6' and 6" mounted furthest forward on the right frame beam part 4. In this way the draught force at the agricultural machine 1 is distributed mainly similarly along the planter aggregates 6 arranged on either side of the vertical plane 39. With an even number of planter aggregates 6 and the draught force placed mainly midway between the two planter aggregates 6' and 6" centrally disposed in the machine 1 a stable equilibrium is achieved in the agricultural machine during work. An additional essential advantage with this construction is that the agricultural machine 1 can be angled to a width that is less than that which can be achieved with such an agricultural machine which, as mentioned above, is shown and described in SE-A-529190. Through this the two aggregates nearest the vertical plane 39 are displaced longitudinally and contribute to the frame beam parts 3, 4 being able to be pushed together to a minimal angle between them.

Since the frame beam parts 3 and 4 come to be rotated mainly equally large angles on each side of the vertical plane 30 of the machine 1, the distances between the soil cultivation rows or sowing rows, which are created by means of neighbouring planter aggregates 6, always come to be mainly equal regardless of the angle between the frame beam parts 3, 4.

The agricultural machine 1 can also be provided with more support wheels, for example an additional one on each frame beam part 3, 4 for use in both the working and transport positions or in either one of these positions. When the distance between the aggregates is to be made as small as possible the position of the frame beam parts 3, 4 is altered to for example the position shown in Fig. 7, which illustrates a position that constitutes a transport position where the width of the agricultural machine is less than the statutory transport width.

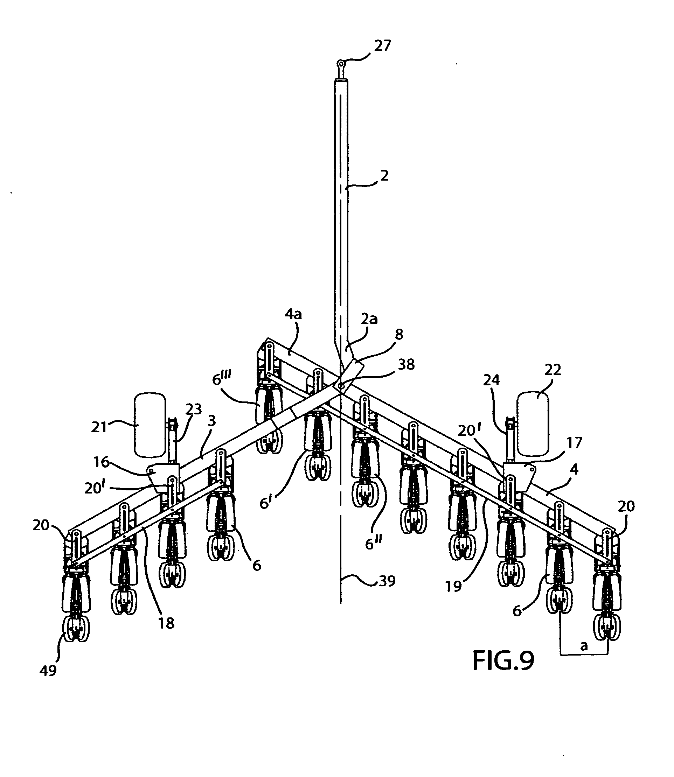

Fig. 9 shows a second embodiment of the agricultural machine 1 according to the invention, which differs from the first embodiment in that the right frame beam part 4 is elongated to the fore at 4a and carries yet another planter aggregate 6"'. Therefore the left frame beam part 3 only carries four planter aggregates 4, while the right frame beam part 4 carries eight planter aggregates 6. The total number accordingly remains twelve, as in the first embodiment. The parallel guide rod 18 along the left frame beam part 3 is rotatably connected to the four planter aggregates 6, while the parallel guide rod 19 along the right frame beam part 4 is rotatably connected to the eight planter aggregates 6. The drawbar 2 has viewed in the driving direction a rear angled part 2a, which is rotatably connected to the joint point 38, so that the vertical plane 39 through the coupling point 27 of the drawbar 2 runs parallel to the driving direction and mainly midway between the centrally disposed planter aggregates 6' and 6", which here thus comprise the second and third planter aggregates on the right frame beam part 4 counting from the left in Fig. 9.

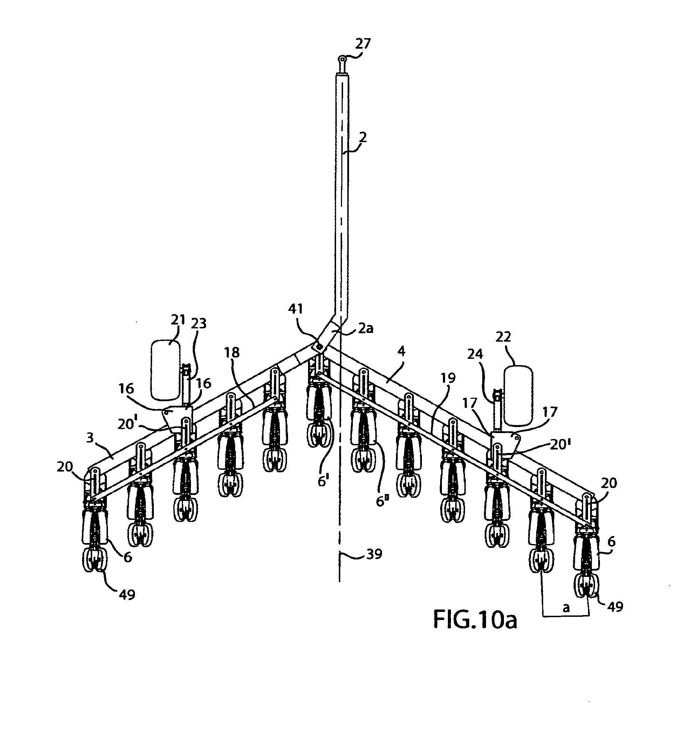

Fig. 10a shows a third embodiment of the agricultural machine 1 according to the invention where the frame beam parts are rotatably connected to each other at their fore ends at 41 viewed in the driving direction. A planter aggregate 6" is rotatably connected at the joint point 41 between the two frame beam parts. The parallel guide rod 18 along the left frame beam part 3 is rotatably connected to five planter aggregates 6, while the parallel guide rod 19 along the right frame beam part 4 is rotatably connected to seven planter aggregates 6, 6', 6". The drawbar 2 has viewed in the driving direction a rear angled part 2a, which is rotatably connected to the joint point 41, so that the vertical plane 39 through the coupling point 27 of the drawbar 2 runs parallel to the driving direction and mainly midway between the centrally disposed planter aggregates 6' and 6". In this embodiment six planter aggregates 6 are rotatably connected to the left frame beam part 3 and seven planter aggregates 6 are rotatably connected to the right frame beam part 4, i.e. one planter aggregate 6' is rotatably connected to both the right and the left frame beam part 4 and 3 respectively at the joint point 41. However the total number is twelve (an even number) through the planter aggregate 6' being rotatably connected to both the frame beam parts 3 and 4.

In a not shown variant of the third embodiment according to Fig. 10a the left parallel guide rod 18 is elongated so that it too is rotatably connected to the planter aggregate 6', while the right parallel guide rod 19 terminates at the planter aggregate 6". This means that the left parallel guide rod 18 controls the six left planter aggregates 6 and 6' and that the right parallel guide rod 19 controls the six right planter aggregates 6 and 6". This is made possible through the frame beam parts 3 and 4 being rotatably jointed at the ends in joint point 41 and the planter aggregate 6' being rotatably connected in the joint point 41.

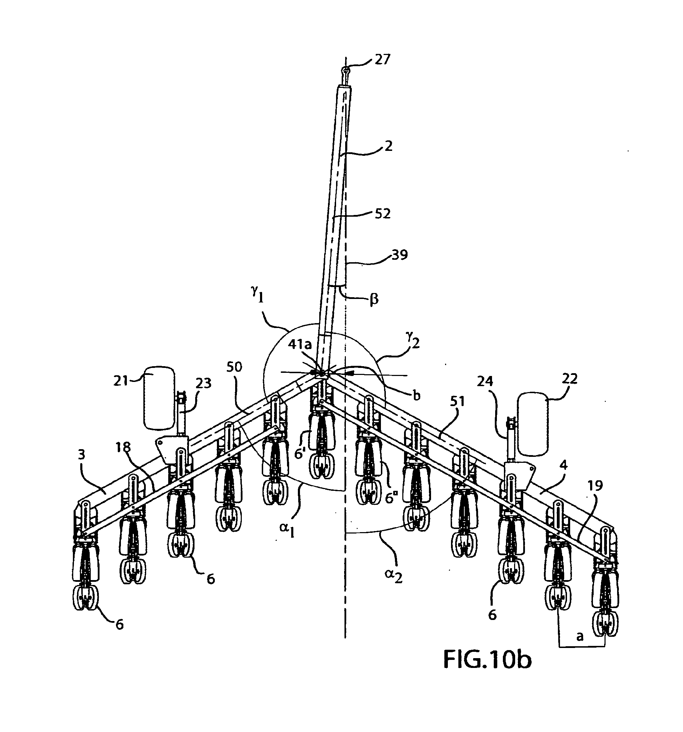

Fig. 10b shows a variant of the third embodiment of the agricultural machine 1 according to the invention where the frame beam parts 3, 4 are rotatably connected to each other at their fore ends at 41a viewed in the driving direction. A planter aggregate 6" is rotatably connected at the joint point 41a between the two frame beam parts 3, 4. The parallel guide rod 18 along the left frame beam part 3 is rotatably connected to five planter aggregates 6, while the parallel guide rod 19 along the right frame beam part 4 is rotatably connected to seven planter aggregates 6, 6', 6". The drawbar 2 in this variant is not provided with a viewed in the driving direction rear angled part but is straight and directly rotatably connected to the joint point 41a. The vertical plane 39 through the coupling point 27 of the drawbar 2 nevertheless runs parallel to the driving direction and mainly midway between the centrally disposed planter aggregates 6' and 6". In this embodiment six planter aggregates 6 are rotatably connected to the left frame beam part 3 and seven planter aggregates 6 are rotatably connected to the right frame beam part 4, i.e. one planter aggregate 6' is rotatably connected to both the right and the left frame beam part 4 and 3 respectively at the joint point 41a. However the total number is twelve (an even number) through the planter aggregate 6' being rotatably connected to both the frame beam parts 3 and 4.

When the frame beam parts 3, 4 are rotated in the horizontal plane by means of the linkage system 30, 31, 36, 37 and hydraulic cylinder shown in Figs. 2 - 5 it is important that the angles α₁ and α₂ are essentially equal to each other during the entire rotation movement between different fixable intended positions. The angle α₁ extends between the central axis 50 of the frame beam part 3 and the vertical plane 39, which extends from the joint point 27 and midway between the central aggregates 6' and 6" of the machine. The angle α₂ extends between the central axis 51 of the frame beam part 4 and the vertical plane 39. The distance b between the joint point 41a and the vertical plane 39 decreases when the frame beam parts 3, 4 are folded backwards through the lateral distance between neighbouring aggregates 6 decreasing. It hereby follows that the angle β between the vertical plane 39 and the line 52 , which extends between the coupling point 27 and the joint point 41a, decreases. In order for the angles α₁ and α₂ to be kept equal to each other during the rotation movement, the angles γ₁ and γ₂, where the angle γ₁ extends between the central axis 50 and the line 52 and the angle γ₂ extends between the central axis 51 and the line 52, must be influenced to change in different ways (since γ₁ = 180° - α₁ + ß while γ₂ = 180° - α₁ - β). This influence is achieved through geometric adaptation of the angles and the rod lengths in the linkage system shown in Figs. 5-7 between the slider link 29 and its fastening points 32, 33 and the thereto rotatably fastened linkage arms 30, 31 and their joint points 34 and 35 at the attachment point between the linkage arms 36 and 37, which are fastened at the frame beam parts 3 and 4 respectively. At forward and backward movement of the hydraulic cylinder 26 this compensation accordingly occurs automatically. This geometric compensation occurs accordingly in all those cases where a line corresponding to the line 52 in Fig. 10b does not coincide with the vertical plane 39, i.e. also in the embodiments in Figs. 10a, 11 and 12. In all other cases this does not need to occur, since γ₁ = γ₂.

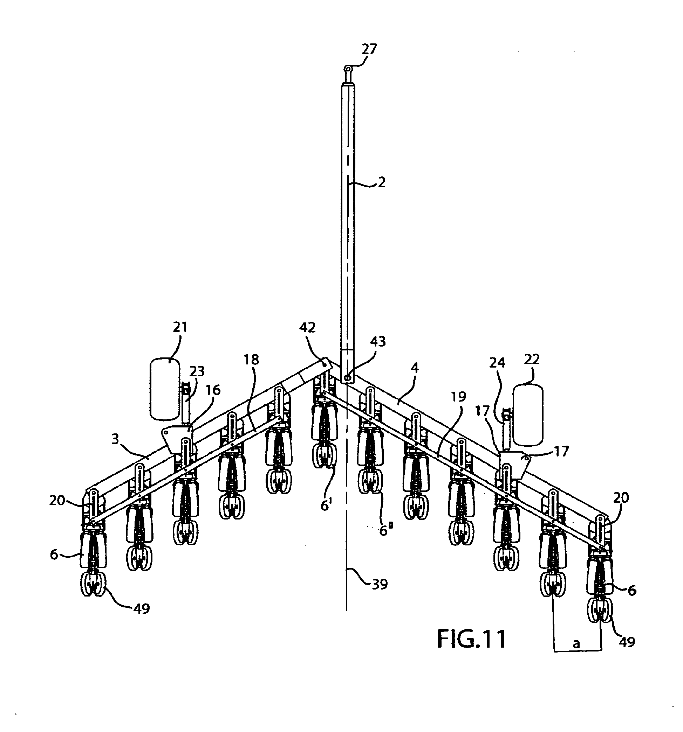

Fig. 11 shows a fourth embodiment of the agricultural machine 1 according to the invention where the frame beam parts 3, 4 are rotatably connected to each other at their fore ends at 42 viewed in the driving direction. A planter aggregate 6' is rotatably connected at the joint point 42 between the two frame beam parts 3, 4. The parallel guide rod 18 along the left frame beam part 3 is rotatably connected to five planter aggregates 6, while the parallel guide rod 19 along the right frame beam part 4 is rotatably connected to seven planter aggregates 6. The rear end of the drawbar 2 is here rotatably connected at a joint point 43 between the centrally disposed planter aggregates 6' and 6". Through the design and function of the linkage device the vertical plane 39 extends through the coupling point 27 of the drawbar 2 midway between the centrally disposed planter aggregates 6' and 6".

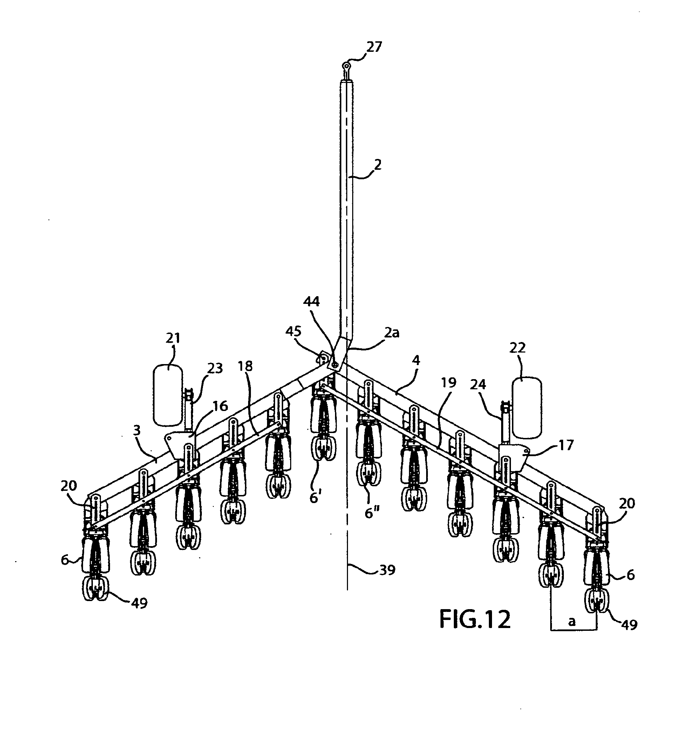

Fig. 12 shows a fifth embodiment of the agricultural machine 1 according to the invention where the frame beam parts 3, 4 are rotatably connected to each other at a joint point 44 at a predetermined distance from the fore end viewed in the driving direction of the right frame beam part 4. A planter aggregate 6' is rotatably connected at a joint point 45 at the fore end of the right frame beam part 4. The parallel guide rod 18 along the left frame beam part 3 is rotatably connected to five planter aggregates 6, while the parallel guide rod 19 along the right frame beam part 4 is rotatably connected to seven planter aggregates 6. The drawbar 2 has viewed in the driving direction a rear angled part 2a, which is rotatably connected to the joint point 44, so that the vertical plane 39 through the coupling point 27 of the drawbar 2 extends mainly midway between the centrally disposed planter aggregates 6' and 6".

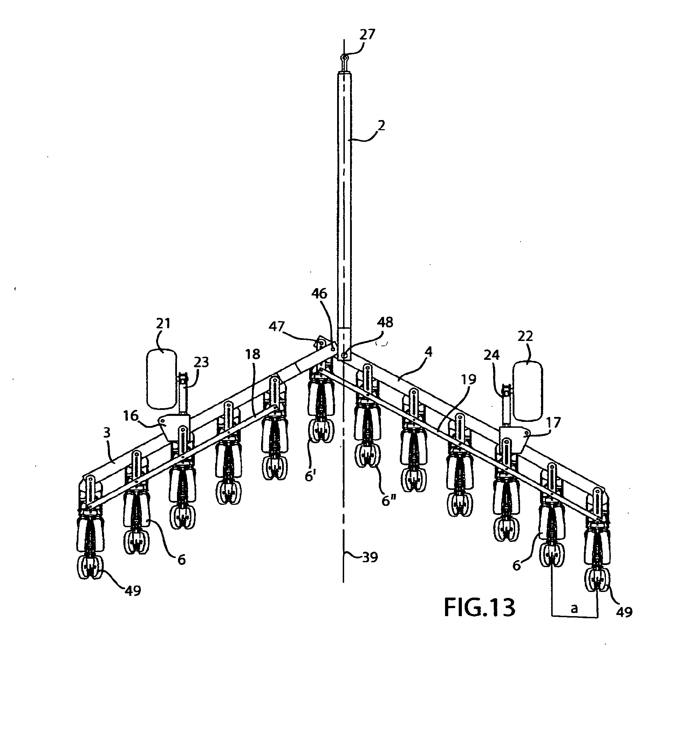

Fig. 13 shows a sixth embodiment of the agricultural machine 1 according to the invention where the frame beam parts 3, 4 are rotatably connected to each other at a joint point 46 at a predetermined distance from the fore end viewed in the driving direction of the right frame beam part 4. A planter aggregate 6' is rotatably connected at a joint point 47 at the fore end of the right frame beam part 4. The parallel guide rod 18 along the left frame beam part 3 is rotatably connected to five planter aggregates 6, while the parallel guide rod 19 along the right frame beam part 4 is rotatably connected to seven planter aggregates 6. The rear end of the drawbar 2 is here rotatably connected at a joint point 48 between the centrally disposed planter aggregates 6' and 6" but separated from the joint point 46 between the frame beams parts so that the vertical plane 39 through the coupling point 27 of the drawbar 2 extends mainly midway between the centrally disposed planter aggregates 6' and 6".

In the above described embodiments the drawbar 2 at its rear end viewed in the driving direction is either straight or has an angled part 2a, which can be angled in the direction that is suitable. The essential is that the vertical plane 39 through the coupling point 27 extends mainly midway between the centrally disposed planter aggregates 6' and 6".

As can be seen in the drawings, the planter aggregates 6' and 6" on either side of the vertical mid-plane 39 are displaced in relation to each other in the longitudinal direction.

The agricultural machine 1 according to the invention is also provided with not shown locking members that are adapted to lock the frame beam parts 3, 4 in decided positions for the intended row spacing. The locking can occur in various ways within the framework of the following patent claims. For example the locking can occur through locking the piston rod of the hydraulic cylinder 12. The slider link 29 on the drawbar 2 can also be lockable in certain decided positions. Sensors can be adapted to measure the angle between the frame beam parts 3, 4 so as in this way to be able to set different row spacings and lock the machine 1 in such positions. The locking can be such that it is limited to certain predetermined positions for intended seeds or it can so constructed that it locks in selected arbitrary positions. Manual mechanical locking in different positions is also possible within the framework of the patent claims. A visual indication can show the driver when the correct position has been adopted, whereupon the locking can be activated from the cab or manually. The frame beam parts 3, 4 are suitably rotated to the correct, predetermined angle while the tractor is driven slowly forwards. A hydraulic valve can be arranged at the hydraulic cylinder 12.

In summary, it is apparent that going from the working position with the greatest row spacing between the tools, i.e. when the frame beam parts 3, 4 extend mainly in the transverse direction, two neighbouring tools are displaced in relation to each other in the longitudinal direction, wherein they are most displaced in the longitudinal direction when the machine reaches its transport position.

The agricultural machine according to the invention can within the framework of the attached claims be modified with regard to combinations of details from the illustrated and described embodiments. For example the embodiments shown can be reversed about the vertical plane 39, which extends through the coupling point 27 and between the two fore, centrally positioned aggregates 6' and 6". In the embodiments twelve planter aggregates are shown (six on each side of the longitudinal vertical central plane), but this number can be both increased and decreased within the framework of the following claims, the main point being that they are so mounted along the frame beam parts that in every working position they maintain a mainly equal distance between each other on each side of the longitudinal vertical mid-plane.

The hydraulic cylinders shown in the drawings can be any control apparatus whatsoever. Further, the tools do not have to be planter aggregates, but can also be other types of soil cultivation tools, such as cultivator tines, rotating discs or other working members.

## Claims

1. Agricultural machine (1) for soil cultivation with variable row spacing, which machine comprises a drawbar (2), arranged on both sides of the drawbar and jointed at the drawbar frame beam parts (3, 4), which are via means (12) rotatably connected to each other, and an even number of tools (6), preferably planter aggregates, which are arranged at reciprocally mainly equal distances along the frame beam parts and in the horizontal plane rotatably mounted on these, wherein the tools are adapted to be brought mainly parallel to the driving direction by means of parallel control members (16, 17, 18, 19), whereby two neighbouring tools of the tools are adapted to be displaced in the longitudinal direction relative to each other on rotation of said frame beam parts (3, 4), **characterised in that** said tools (6), which are connected to the one frame beam part (4), are at least two more than the tools that are rotatably connected to the other frame beam part (3) and that the two viewed in the driving direction transversely centrally disposed tools (6', 6") of the tools (6, 6', 6") are so arranged that a vertical plane (39), which extends through the fore coupling point (27) of the drawbar (2) and straight backwards in the direction of travel of the machine, is disposed mainly midway between these centrally disposed tools (6', 6").

2. Agricultural machine according to Claim 1, **characterised in that** the tools (6, 6', 6") are connected group wise with said parallel control members (18, 19), preferably with one parallel control member connected to each frame beam part (3, 4).

3. Agricultural machine according to Claim 1 or 2, **characterised in that** said parallel control members are comprised of control rods (18, 19), which are arranged mainly parallel to their respective frame beam part at a predetermined distance from these, and that the tools (6, 6', 6") are rotatably mounted at said frame beam parts (3, 4) and also at said control rods.

4. Agricultural machine according to any one of Claims 1-3, **characterised in that** it comprises a drawbar (2) that is angled at its rear end (2a) and so rotatably fastened at the frame beam parts (3, 4) that the conceptual extension of the drawbar is disposed mainly in the longitudinal vertical plane (39) between the two centrally disposed tools (6' and 6") of the tools (6, 6', 6").

5. Agricultural machine according to any one of Claims 1-3, **characterised in that** it comprises a drawbar (2) that has a for a vehicle intended coupling end (27), which lies mainly in the vertical plane (39) between the two centrally disposed tools (6' and 6") of the tools (6, 6', 6").

6. Agricultural machine according to any one of Claims 1-5, **characterised in that** said means (12) comprise a control apparatus which is connected to rods (30, 31) coupled to said frame beam parts (3, 4) so as to bring about equal displacement of the frame beam parts on both sides of the vertical plane (39).

7. Agricultural machine according to any one of the preceding Claims, **characterised in that** said frame beam parts (3, 4) are arranged to be swung from a position where they are mainly perpendicular to the driving direction and backwards towards a transport position with minimal distance between the tools (6, 6', 6"), wherein between these positions said frame beams can be locked in predetermined working positions.

8. Agricultural machine according to any one of the preceding Claims, **characterised in that** said frame beam parts (3, 4) are provided with an additional vertical joint to further decrease the width of the machine.

9. Agricultural machine according to any one of the preceding Claims, **characterised in that** sensors are adapted so as through rotation of the frame beam parts (3, 4) to set predetermined distances between the tools (6, 6', 6"), so that the positions of frame beam parts can be locked automatically or manually.

## Patentansprüche

1. Landwirtschaftliche Maschine (1) zur Bodenbestellung mit variablem Reihenabstand, wobei die Maschine eine Zugstange (2) aufweist, wobei an beiden Seiten der Zugstange Rahmenträgerteile (3, 4) angeordnet und an der Zugstange angelenkt sind, welche über Mittel (12) miteinander drehbar verbunden sind, und eine gerade Anzahl von Werkzeugen (6), bevorzugt Pflanzaggregate, die mit gleichen Hauptabständen voneinander entlang den Rahmenträgerteilen angeordnet sind und in der horizontalen Ebene an diesen drehbar angebracht sind, worin die Werkzeuge dazu ausgelegt sind, mittels paralleler Steuerelemente (16, 17, 18, 19) hauptsächlich parallel zur Antriebsrichtung gebracht zu werden, wobei zwei benachbarte Werkzeuge der Werkzeuge dazu ausgelegt sind, bei Drehung der Rahmenträgerteile (3, 4) in der Längsrichtung relativ zueinander verlagert zu werden,
**dadurch gekennzeichnet, dass** die Werkzeuge (6), die mit dem einen Rahmenträgerteil (4) verbunden sind, zumindest zwei mehr als die Werkzeuge sind, die mit dem anderen Rahmenträgerteil (3) drehbar verbunden sind, und das die zwei, bei Betrachtung in der Antriebsrichtung, transversal mittig angeordneten Werkzeuge (6', 6") der Werkzeuge (6, 6', 6") so angeordnet sind, dass eine vertikale Ebene (39), die sich durch den vorderen Kopplungspunkt (27) der Zugstange (2) hindurch und gerade nach hinten in der Fahrtrichtung der Maschine erstreckt, hauptsächlich mittig zwischen diesen zentral angeordneten Werkzeugen (6', 6") angeordnet ist.

2. Landwirtschaftliche Maschine nach Anspruch 1, **dadurch gekennzeichnet, dass** die Werkzeuge (6, 6', 6") gruppenweise mit den parallelen Steuerelementen (18, 19) verbunden sind, bevorzugt mit einem parallelen Steuerelement, das mit jedem Rahmenträgerteil (3, 4) verbunden ist.

3. Landwirtschaftliche Maschine nach Anspruch 1 oder 2, **dadurch gekennzeichnet, dass** die parallelen Steuerelemente aus Steuerstangen (18, 19) aufgebaut sind, die hauptsächlich parallel zu ihrem jeweiligen Rahmenträgerteil mit einem vorbestimmten Abstand von diesem angeordnet sind, und dass die Werkzeuge (6, 6', 6") an den Rahmenträgerteilen (3, 4) und auch an den Steuerstangen drehbar angebracht sind.

4. Landwirtschaftliche Maschine nach einem der Ansprüche 1 bis 3, **dadurch gekennzeichnet, dass** sie eine Zugstange (2) aufweist, die an ihrem hinteren Ende (2a) gewinkelt ist und an den Rahmenträgerteilen (3, 4) drehbar befestigt ist, so dass die konzeptuelle Erstreckung der Zugstange hauptsächlich in der vertikalen Längsebene (39) zwischen den zwei zentral angeordneten Werkzeugen (6' und 6") der Werkzeuge (6, 6', 6") angeordnet ist.

5. Landwirtschaftliche Maschine nach einem der Ansprüche 1 bis 3, **dadurch gekennzeichnet, dass** sie eine Zugstange (2) aufweist, die vorderes, für ein Fahrzeug dienendes Kupplungsende (27) aufweist, das hauptsächlich in der vertikalen Ebene (39) zwischen den zwei zentral angeordneten Werkzeugen (6' und 6") der Werkzeuge (6, 6', 6") liegt.

6. Landwirtschaftliche Maschine nach einem der Ansprüche 1 bis 5, **dadurch gekennzeichnet, dass** die Mittel (12) eine Steuervorrichtung aufweisen, die mit Stangen (30, 31) verbunden ist, die mit den Rahmenträgerteilen (3, 4) gekoppelt sind, um einen etwa gleichen Versatz der Rahmenträgerteile an beiden Seiten der vertikalen Ebene (39) zu erbringen.

7. Landwirtschaftliche Maschine nach einem der vorhergehenden Ansprüche, **dadurch gekennzeichnet, dass** die Rahmenträgerteile (3, 4) so angeordnet sind, dass sie von einer Position, wo sie hauptsächlich senkrecht zur Fahrtrichtung und hinten sind, zu einer Transportposition mit einem minimalen Abstand zwischen den Werkzeugen (6, 6', 6") geschwenkt werden, wobei zwischen den Positionen die Rahmenträger in den vorbestimmten Arbeitspositionen arretiert werden können.

8. Landwirtschaftliche Maschine nach einem der vorhergehenden Ansprüche, **dadurch gekennzeichnet, dass** die Rahmenträgerteile (3, 4) mit einem zusätzlichen vertikalen Gelenk versehen sind, um die Breite der Maschine weiter zu verringern.

9. Landwirtschaftliche Maschine nach einem der vorhergehenden Ansprüche, **dadurch gekennzeichnet, dass** die Sensoren ausgelegt sind, um durch Drehung der Rahmenträgerteile (3, 4) vorbestimmte Abstände zwischen den Werkzeugen (6, 6', 6") zu setzen, so dass die Positionen der Rahmenträgerteile automatisch oder manuell arretiert werden können.

## Revendications

1. Machine agricole (1) pour le travail du sol avec un espacement de sillons variable, laquelle machine comprend une barre d'attelage (2), des parties en poutre formant châssis (3, 4), disposées des deux côtés de la barre d'attelage et articulées à la barre d'attelage, qui sont reliées de manière pivotante l'une à l'autre par des moyens (12), et un nombre égal d'outils (6), de préférence des agrégats de semoirs, qui sont disposés à des distances réciproque essentiellement égales le long des parties en poutre formant châssis et qui sont montés rotatifs dans le plan horizontal sur celles-ci, les outils étant adaptés à être amenés essentiellement parallèlement à la direction de déplacement au moyen d'organes de commande parallèles (16, 17, 18, 19), de sorte que deux outils voisins sont adaptés à être déplacés dans la direction longitudinale l'un par rapport à l'autre lors de la rotation desdites parties en poutre formant châssis (3, 4), **caractérise en ce que** lesdits outils (6), qui sont reliés à l'une des parties en poutre formant châssis (4), sont au nombre d'au moins deux de plus que les outils qui sont reliés en rotation à l'autre partie en poutre formant châssis (3), et **en ce que** les deux outils (6', 6"), parmi les outils (6, 6', 6"), qui, vus dans le sens du déplacement, sont disposés centralement et transversalement, sont disposés de telle sorte qu'un plan vertical (39), qui passe par le point de liaison avant (27) de la barre d'attelage (2) et qui s'étend droit vers l'arrière dans la direction de déplacement de la machine, est disposé essentiellement à mi-chemin entre ces outils disposés centralement (6', 6").

2. Machine agricole selon la revendication 1, **caractérisée en ce que** les outils (6, 6', 6") sont reliés en groupe auxdits organes de commande parallèles (18, 19), de préférence avec un organe de commande parallèle relié chaque partie en poutre formant châssis (3, 4).

3. Machine agricole selon la revendication 1 ou la revendication 2, **caractérisée en ce que** lesdits organes de commande parallèles sont formées par des barres de commande (18, 19), qui sont disposées essentiellement parallèlement à leur partie en poutre formant châssis respective, à une distance prédéterminée de celle-ci, et **en ce que** les outils (6, 6', 6") sont montés de façon rotative sur lesdites parties en poutre formant châssis (3, 4) et également sur lesdites barres de commande.

4. Machine agricole selon l'une quelconque des revendications 1 à 3, **caractérisée en ce qu'**elle comprend une barre d'attelage (2) qui est coudée à son extrémité arrière (2a) et qui est reliée de manière rotative aux parties en poutre formant châssis (3, 4) de telle manière que la prolongation abstraite de la barre d'attelage soit disposée essentiellement dans le plan vertical longitudinal (39) situé entre les deux outils (6' et 6") qui, parmi les outils (6, 6', 6") sont disposés centralement.

5. Machine agricole selon 1' une quelconque des revendications 1 à 3, **caractérisée en ce qu'**elle comprend une barre d'attelage (2) qui a une extrémité d'attelage pour un véhicule adapté (27), qui se trouve essentiellement dans le plan vertical (39) entre les deux outils (6' et 6") qui, parmi les outils (6, 6', 6"), sont disposés centralement.

6. Machine agricole selon l'une quelconque des revendications 1 à 5, **caractérisée en ce que** lesdits moyens (12) comprennent un dispositif de commande qui est relié à des tiges (30, 31) reliées audites parties en poutre formant châssis (3, 4) de manière à réaliser un déplacement égal des parties en poutre formant châssis sur les deux côtés du plan vertical (39).

7. Machine agricole selon l'une quelconque des revendications précédentes, **caractérisée en ce que** lesdites parties en poutre formant châssis (3, 4) sont agencées de manière à être pivotées entre une position dans laquelle elles sont principalement perpendiculaires à la direction de déplacement, et une position de transport située vers l'arrière, dans laquelle il y a une distance minimal entre les outils (6, 6', 6"), lesdites poutres formant châssis, entre ces positions, étant aptes à être verrouillées dans des positions de travail prédéterminées.

8. Machine agricole selon l'une quelconque des revendications précédentes, **caractérisée en ce que** lesdites parties en poutre formant châssis (3, 4) sont pourvues d'une articulation verticale additionnelle pour réduire de manière supplémentaire la largeur de la machine.

9. Machine agricole selon l'une quelconque des revendications précédentes, **caractérise en ce que** des capteurs sont adaptés de manière à définir, lors de la rotation des parties en poutre formant châssis (3, 4), des distances prédéterminées entre les outils (6, 6', 6"), de telle sorte que les positions des parties en poutre formant châssis sont aptes à être verrouillées automatiquement ou manuellement.
